# EUROPEAN PATENT SPECIFICATION

(11) **EP 4 466 586 B1**
(45) Date of publication and mention of the grant of the patent: **27.08.2025**
(21) Application number: 22854446.6
(22) Date of filing: 27.12.2022
(51) Int. Cl.: G06F 1/16

(54) **COMPUTING DEVICE HINGE ASSEMBLY**
SCHARNIERANORDNUNG FÜR EIN COMPUTERGERÄT
ENSEMBLE DE CHARNIÈRE POUR DISPOSITIF INFORMATIQUE

(30) Priority: 21.01.2022 NL 2030635
(43) Date of publication of application: 27.11.2024
(73) Proprietor: Microsoft Technology Licensing, LLC, Redmond, WA 98052-6399 (US)
(72) Inventor: YAREMENKO, Denys V., Redmond, Washington 98052-6399 (US); RAGHAVENDRA, Prasad, Redmond, Washington 98052-6399 (US)
(74) Representative: Murgitroyd & Company
(86) International application number: PCT/US2022/082410
(87) International publication number: WO 2023/141005

(56) References cited:
- EP-A1- 2 669 759
- US-A1- 2019 050 028
- US-A1- 2020 064 890
- US-A1- 2020 291 702

## Description

### BACKGROUND

Foldable computing devices with two displays can utilize hinges that allow the displays to fold relative to one another. Some hinge mechanisms generate torque on shafts coupled to the displays to enable the displays to maintain particular orientations.

The following documents may provide technical background to the present disclosure: US2020/064890 A1; EP2669759 A1; US2020/291702 A1; and US2019/050028 A1.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

Examples are disclosed that relate to hinge assemblies for rotatably coupling a first substrate of a computing device to a second substrate of the computing device. As defined in appended claim 1, a hinge assembly comprises a first hinge bracket affixed to the first substrate and comprising a first drive gear and first drive gear shaft. A second hinge bracket is affixed to the second substrate and comprises a second drive gear and second drive gear shaft. A first idler gear engages the first drive gear and a second idler gear, with the second idler gear engaging the second drive gear. The first idler gear comprises a first idler gear shaft and the second idler gear comprises a second idler gear shaft.

A first friction band comprises a first arcuate contacting surface, an opposing second arcuate contacting surface, and a first biasing portion between the first arcuate contacting surface and the second arcuate contacting surface. The first biasing portion is biased in a first direction to press the first arcuate contacting surface against a first portion of the first drive gear shaft and the second arcuate contacting surface against a third portion of the second drive gear shaft. A second friction band, separate to the first friction band, comprises a third arcuate contacting surface, an opposing fourth arcuate contacting surface, and a second biasing portion between the third arcuate contacting surface and the fourth arcuate contacting surface. The second biasing portion is biased in a second direction opposite to the first direction to press the third arcuate contacting surface against a second portion of the first drive gear shaft and the fourth arcuate contacting surface against a fourth portion of the second drive gear shaft. Advantageously and as described further below, in this configuration the first friction band and the second friction band are moveable independently of one another to balance torque applied to the first drive gear shaft and the second drive gear shaft.

In another embodiment, a computing device comprises a first display substrate and a second display substrate rotatably coupled to the first display substrate via two hinge assemblies as described above. Each of the hinge assemblies comprises a first hinge bracket affixed to the first substrate and comprising a first drive gear and first drive gear shaft. A second hinge bracket is affixed to the second substrate and comprises a second drive gear and second drive gear shaft. A first idler gear engages the first drive gear and a second idler gear, with the second idler gear engaging the second drive gear. The first idler gear comprises a first idler gear shaft and the second idler gear comprises a second idler gear shaft.

A first friction band comprises a first arcuate contacting surface, an opposing second arcuate contacting surface, and a first biasing portion between the first arcuate contacting surface and the second arcuate contacting surface. The first biasing portion is biased in a first direction to press the first arcuate contacting surface against a first portion of the first drive gear shaft and the second arcuate contacting surface against a third portion of the second drive gear shaft. A second friction band comprises a third arcuate contacting surface, an opposing fourth arcuate contacting surface, and a second biasing portion between the third arcuate contacting surface and the fourth arcuate contacting surface. The second biasing portion is biased in a second direction opposite to the first direction to press the third arcuate contacting surface against a second portion of the first drive gear shaft and the fourth arcuate contacting surface against a fourth portion of the second drive gear shaft.

The claimed invention also provides a method of rotatably coupling a first display substrate of a computing device to a second display substrate via at least one hinge assembly. The method comprises engaging a first idler gear with a second idler gear and a first drive gear of a first hinge bracket, wherein the first idler gear comprises a first idler gear shaft and the second idler gear comprises a second idler gear shaft. The second idler gear is also engaged with a second drive gear of a second hinge bracket. A first biasing portion of a first friction band is biased in a first direction to press a first arcuate contacting surface of the first friction band against a first portion of a first drive gear shaft of the first hinge bracket, and press a second arcuate contacting surface of the first friction band opposite to the first arcuate contacting surface against a third portion of a second drive gear shaft of the second hinge bracket.

A second biasing portion of a second friction band is biased in a second direction opposite to the first direction to press a third arcuate contacting surface of the second friction band against a second portion of the first drive gear shaft, and press a fourth arcuate contacting surface of the second friction band opposite to the third arcuate contacting surface against a fourth portion of the second drive gear shaft, wherein the second friction band is separate to the first friction band. The first hinge bracket is then affixed to the first display substrate, and the second hinge bracket is affixed to the second display substrate.

### BRIEF DESCRIPTION OF THE DRAWINGS

FIG. 1 shows one example of a foldable computing device utilizing hinge assemblies according to examples of the present disclosure.
FIG. 2 shows one of the hinge assemblies of FIG. 1 according to examples of the present disclosure.
FIG. 3 shows an exploded view of the hinge assembly of FIG. 2 according to examples of the present disclosure.
FIG. 4 shows an end view of portions of the hinge assembly of FIG. 2 according to examples of the present disclosure.
FIG. 5 shows an exploded view of other implementations of a hinge assembly according to examples of the present disclosure.
FIG. 6 shows an end view of one implementation of a hinge assembly shown in FIG. 5 according to examples of the present disclosure.
FIG. 7 shows an end view of another implementation of a hinge assembly shown in FIG. 5 according to examples of the present disclosure.
FIG. 8 shows an end view of the gear train of the hinge assemblies of FIGS. 3 and 5 according to examples of the present disclosure.
FIG. 9 shows a partial view of an idler tooth between two drive gear teeth according to examples of the present disclosure.
FIG. 10 shows the leading face of the idler tooth contacting the trailing face of the drive gear after rotation of the idler gear retention component according to examples of the present disclosure.
FIGS. 11A and 11B shows a flow diagram of an example method of rotatably coupling a first display substrate of a computing device to a second display substrate according to examples of the present disclosure.

### DETAILED DESCRIPTION

As noted above, some foldable computing devices utilize two displays with hinges that allow the displays to fold relative to one another. Some hinge mechanisms generate torque on shafts coupled to the displays to enable the displays to maintain particular orientations. However, when such torque is applied unevenly to the shafts, the displays can move at different rates of rotation and provide an undesirable user experience. Such mismatched torque amounts also cause uneven wear on gear surfaces of hinge gear trains, thereby increasing gear backlash over time.

Accordingly, the present disclosure describes computing devices, hinge assemblies, and related methods that address one or more of the above-described issues. As described in more detail below, hinge assemblies of the present disclosure include first and second hinge brackets affixed to corresponding substrates of a foldable computing device. Each hinge bracket includes a drive gear and shaft. First and second idler gears engage the drive gears. A first friction band comprises a first biasing portion that is biased in a first direction to press a first arcuate contacting surface of the first friction band against the first drive gear shaft and a second arcuate contacting surface against the second drive gear shaft. A second friction band opposite the first friction band comprises a second biasing portion that is biased in an opposing second direction to press a third arcuate contacting surface of the second friction band against the first drive gear shaft and a fourth arcuate contacting surface against the second drive gear shaft

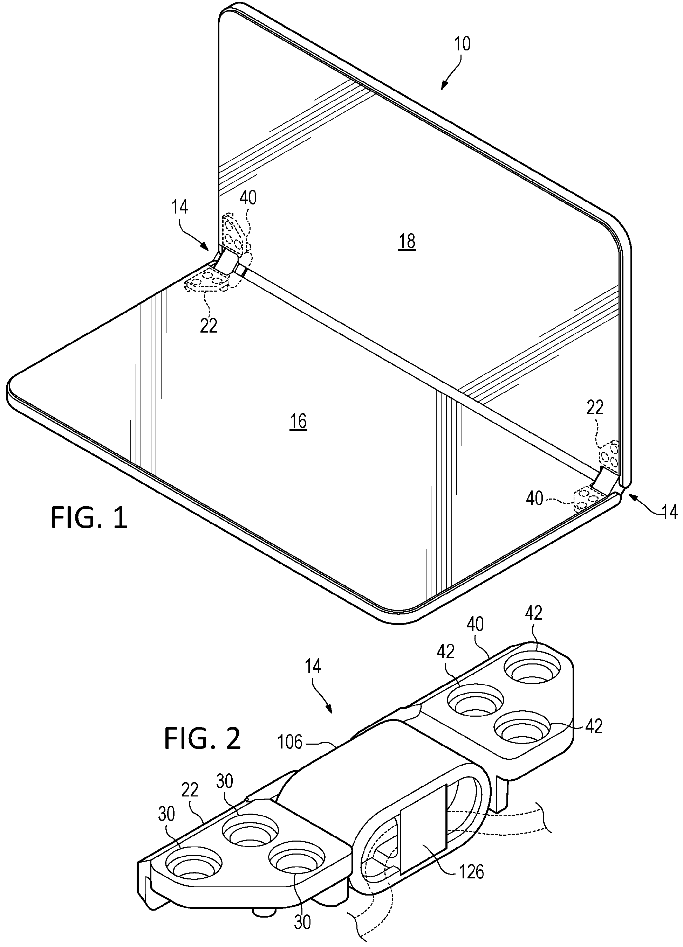

FIGS. 1-4 show one example of a computing device 10 and hinge assemblies 14 according to examples of the present disclosure. In this example, computing device 10 is a foldable computing device that includes a first display substrate 16 rotatably coupled to a second display substrate 18 via hinge assemblies 14. In some examples, the first display substrate 16 and second display substrate 18 are rotatable through approximately 360 degrees relative to one another. In other examples, the first display substrate 16 and second display substrate 18 are rotatable through less than 360 degrees relative to one another.

In this example, two hinge assemblies 14 are utilized to couple the first and second display substrates. In other examples, a single hinge assembly or three or more hinge assemblies of the present disclosure can be utilized to rotatably couple two substrates of a computing device.

With reference to FIGS. 1 - 3, each of the hinge assemblies 14 comprises a first hinge bracket 22 that is affixed to the first substrate 16. In this example and as indicated in FIG. 1, the first hinge brackets 22 are located within the first substrate 16 to be out of view of the user. The first hinge brackets 22 are affixed to the first substrate 16 using one or more fasteners, such as screws. In the present example, the first hinge bracket 22 includes three apertures 30 that each receive screws (not shown) for fastening the bracket to the first substrate 16.

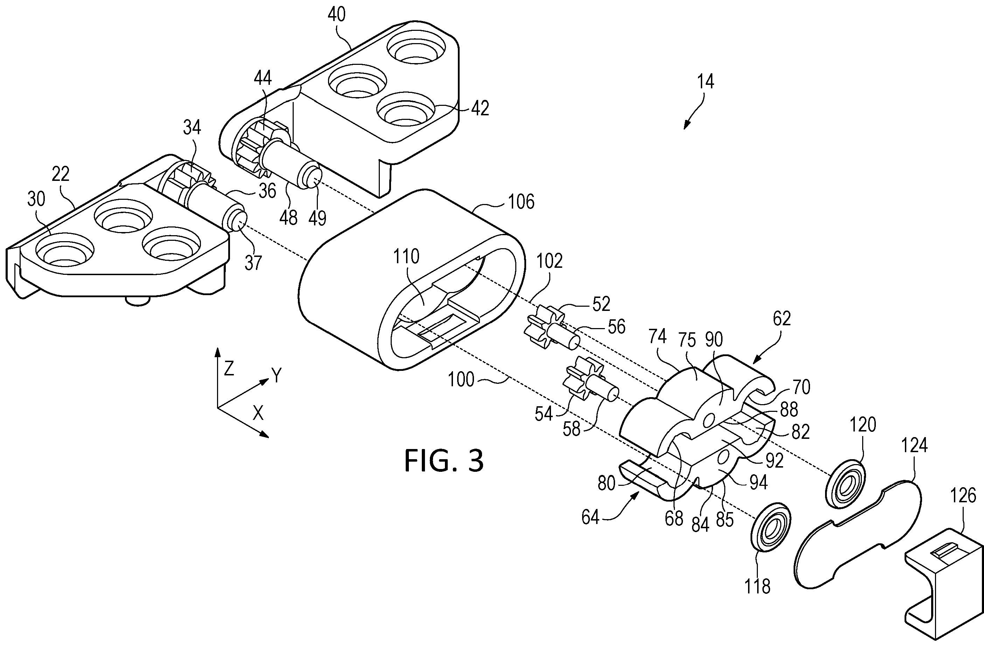

As shown in FIG. 3, each first hinge bracket 22 comprises a first drive gear 34 and first drive gear shaft 36. The first drive gear 34 and first drive gear shaft 36 are rigidly affixed to the hinge bracket, such that rotation of the first drive gear causes rotation of the bracket (and attached substrate). As described in more detail below, the first drive gear 34 forms one component of a synchronizing gear train that synchronizes rotation of the first substrate 16 and second substrate 18 as the two substrates are moved relative to one another utilizing hinge assemblies 14.

In a similar manner, each of the hinge assemblies 14 comprises a second hinge bracket 40 that is affixed to the second substrate 18. Like the first hinge brackets 22, the second hinge brackets 40 are located within the second substrate 18 out of view of the user. The second hinge brackets 40 are affixed to the second substrate 18 using one or more fasteners, such as screws. In the present example, the second hinge bracket 40 includes three apertures 42 that each receive screws (not shown) for fastening the bracket to the second substrate 18.

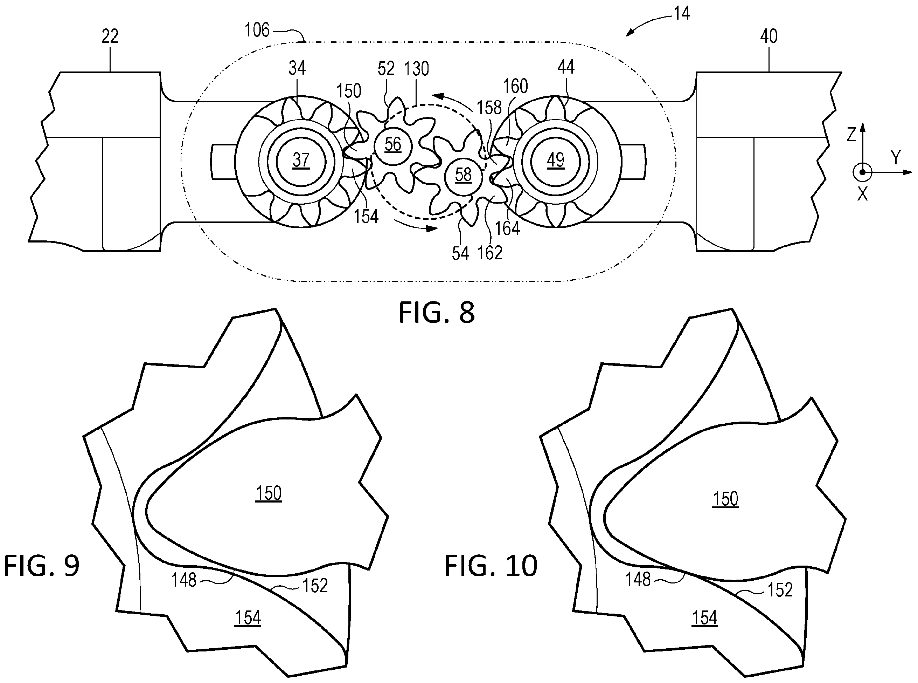

Like the first hinge brackets 22, each of the second hinge brackets 40 comprises a second drive gear 44 and second drive gear shaft 48 that are rigidly affixed to the hinge brackets. As noted above, the second drive gear 44 forms one component of the synchronizing gear train that synchronizes rotation of the first substrate 16 and second substrate 18 as the two substrates are moved relative to one another utilizing hinge assemblies 14. More particularly and with reference to FIGS. 3 and 8, a first idler gear 52 engages the first drive gear 34 and a second idler gear 54. The second idler gear 54 also engages the second drive gear 44. In this manner, when one of the first or second substrates is rotated about its corresponding drive gear, this gear train causes the other substrate to rotate about its drive gear in a corresponding manner.

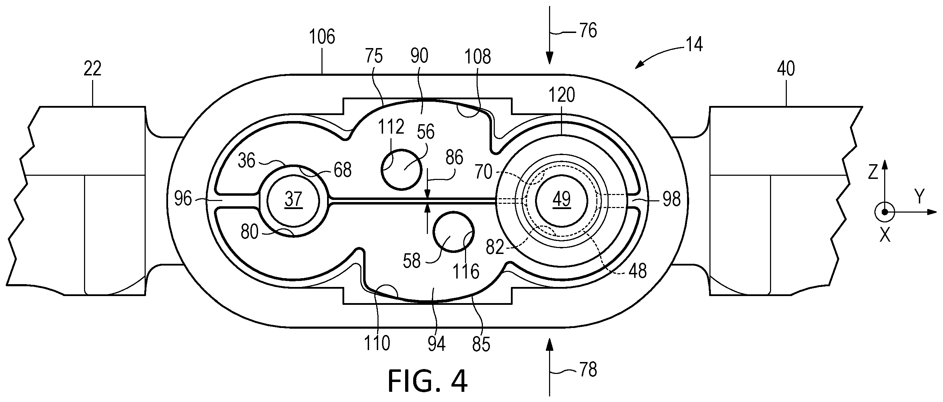

With reference now to FIGS. 3 and 4, and in one potential advantage of the present disclosure, each hinge assembly 14 utilizes a first friction band 62 that presses in a first direction against the first and second drive gear shafts 36, 48, and an opposing, separate second friction band 64 that presses against opposite sides of the first and second drive gear shafts 36, 48 in the opposite direction to balance torque applied to the two shafts. Advantageously and as described in more detail below, because these two friction bands are moveable independently of one another, the torque loads on each drive shaft are actively balanced to reduce torque differences between the two shafts.

In the present example of FIGS. 3 and 4, each hinge assembly 14 includes a first friction band 62 comprising a first arcuate contacting surface 68, an opposing second arcuate contacting surface 70, and a first biasing portion 74 between the first arcuate contacting surface and the second arcuate contacting surface. In this example the first biasing portion 74 comprises a first arcuate biasing surface 75 about which the first friction band is pivotable. As described further below, the first arcuate biasing surface 75 is biased in a first direction 76 toward the two drive gear shafts to press the first arcuate contacting surface 68 against a first portion of the first drive gear shaft 36 and press the second arcuate contacting surface 70 against a third portion of the second drive gear shaft 48. Advantageously, the curvature of the first arcuate biasing surface 75 (and second arcuate biasing surface 85 described below) enables the biasing portion to self-adjust and compensate for component changes over time, such as wearing of the first and/or second arcuate contacting surfaces 68, 70, by pivoting against a first inner surface 108 of the enclosure 106 described further below. In this manner, the frictional forces applied by the first and second arcuate contacting surfaces 68, 70 to the first portion of the first drive gear shaft 36 the third portion of the second drive gear shaft 48, respectively, are correspondingly adjusted and more evenly distributed. Further, the curvatures of the first and second arcuate contacting surfaces 68, 70 substantially match the curvatures of the first drive gear shaft 36 and second drive gear shaft, respectively, to advantageously apply frictional force to the shafts across the entire surface areas of the contacting surfaces.

In a similar manner, each hinge assembly 14 includes an opposing second friction band 64 comprising a third arcuate contacting surface 80, an opposing fourth arcuate contacting surface 82, and a second biasing portion 84 between the third arcuate contacting surface and the fourth arcuate contacting surface. As with the first friction band 62, in this example the second biasing portion 84 comprises a second arcuate biasing surface 85 about which the second friction band 64 is pivotable. The second arcuate biasing surface 85 is biased in a second direction 78 opposite to the first direction 76 to press the third arcuate contacting surface 80 against an opposing second portion of the first drive gear shaft 36 and press the fourth arcuate contacting surface 82 against an opposing fourth portion of the second drive gear shaft 48.

In this example, to provide the biasing force that presses the arcuate contacting surfaces of the first friction band 62 and second friction band 64 against the first drive gear shaft 36 and second drive gear shaft 48, respectively, the first friction band and second friction band are inserted into an enclosure 106. As best seen in FIG. 4, which omits the first disc stop 118, end cap 124, and cable bracket 126 for clarity, when the first friction band 62 and second friction band 64 are inserted, the enclosure 106 provides an interference fit in which a first inner surface 108 of the enclosure compresses the first arcuate biasing surface 75 of the first central portion 90 of the first friction band in the first direction 76, which in turn presses the first arcuate contacting surface 68 against the first drive gear shaft 36 and the second arcuate contacting surface 70 against the second drive gear shaft 48.

Similarly, the enclosure 106 provides an interference fit with the second friction band 64 in which a second inner surface 110 of the enclosure compresses the second arcuate biasing surface 85 of the second central portion 94 of the second friction band in the second direction 78 opposite to the first direction 76, which in turn presses the third arcuate contacting surface 80 against the opposite side of the first drive gear shaft 36 and the fourth arcuate contacting surface 82 against the opposite side of the second drive gear shaft 48. Additionally, and in another potential advantage of this configuration, in addition to providing an interference fit, the enclosure 106 operates to protect the friction bands and other components from external contact and potential damage.

In the present example, the first direction 76 and the second direction 78 are orthogonal to axes 100, 102 of the first drive gear shaft 36 and the second drive gear shaft 48, respectively. In this manner, the contact pressure between the arcuate contacting surfaces of the first friction band 62 and second friction band 64 and the surfaces of the first drive gear shaft 36 and second drive gear shaft 48 is substantially evenly distributed across the surfaces. Accordingly, by providing a more uniform distribution of force across the two drive gear shafts and the arcuate contacting surfaces, over time these surfaces may wear at more consistent rates, thereby extending the useful life of these components and providing a more uniform user experience.

As shown in FIG. 4, with the first friction band 62 and second friction band 64 inserted and press-fit into the enclosure 106, a gap 86 is maintained between these two structures. In this manner, the compression of the first drive gear shaft 36 between the first arcuate contacting surface 68 and the third arcuate contacting surface 80 and the compression of the second drive gear shaft 48 between the second arcuate contacting surface 70 and the fourth arcuate contacting surface 82 creates frictional resistance to rotation of the gear shafts that enables the attached displays to maintain particular orientations relative to one another. Additionally, and in another potential advantage of the present disclosure, by utilizing two independent and separate friction bands, the two friction bands can pivot independently of one another, and accordingly are independently self-adjustable over the life of the mechanism to compensate for different component wear rates, for example. Further, by compressing the two friction bands together at centrally-located pivot points on their respective arcuate biasing surfaces 75 and 85 that are positioned between the axes 100, 102 of the two drive gear shafts 36, 48, respectively, each of the friction bands can independently pivot and balance out the forces applied to the two drive gear shafts.

For example, if the two drive gear shafts have slightly different diameters and/or the inside diameters of the opposing contacting surfaces of the friction bands are different, the present configuration advantageously minimizes or substantially eliminates potential torque differences applied to the drive shafts by centrally pivoting the two friction bands to balance out the forces applied to the drive gear shafts.

In another potential advantage of this example, the enclosure's first inner surface 108 and second inner surface 110 are recessed within the enclosure 106 such that the first and second friction bands 62, 64 are recessed within the enclosure when installed. This is illustrated in FIG. 2 in which the first and second friction bands 62, 64 are located within the enclosure 106. Advantageously, this configuration protects the first and second friction bands 62, 64 from outside contact, and similarly encloses and protects the first drive gear 34, second drive gear, first idler gear 52, and second idler gear 54 (see also FIG. 3).

As shown in FIGS. 2 and 3, a cable bracket 126 is also installed on the end of the enclosure 106 to capture and route one or more cables. With reference to FIGS. 3 and 4, a first disc stop 118 and second disc stop 120 are fitted over a first cylindrical protrusion 37 and second cylindrical protrusion 49 of the first drive gear shaft 36 and second drive gear shaft 48, respectively. In FIGS. 4, 6 and 7 the first disc stop 118 is not shown for descriptive purposes. As shown in FIG. 3 an end cap 124 is inserted into the enclosure 106 to cover the first disc stop 118 and second disc stop 120.

With reference to FIG. 4, in this example both friction bands include holes in which the two idler gear shafts are rotatably received. More particularly, the first friction band 62 includes a first idler hole 112 that rotatably receives the first idler gear shaft 56 of the first idler gear 52. Similarly, the second friction band 64 includes a second idler hole 116 that rotatably receives the second idler gear shaft 58 of the second idler gear 54. As shown in FIG. 4 and with reference also to FIG. 8, the first idler hole 112 and second idler hole 116 are offset in the y-axis direction to align the corresponding idler gears 52, 54 in the gear train with the first and second drive gears 34, 44.

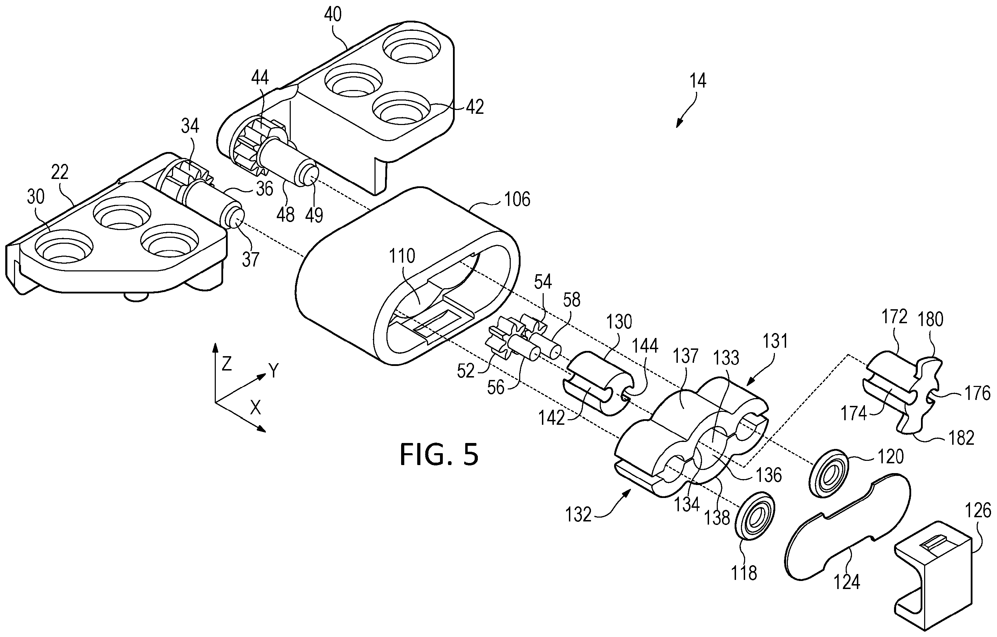

With reference now to FIG. 5, in other example configurations two friction bands are configured to receive an idler gear retention component that rotatably receives the first idler gear shaft 56 and the second idler gear shaft 58. As described in more detail below, with these configurations during assembly the idler gear retention component can be rotated to remove backlash between the idler gears and the drive gears, at which point the idler gear retention component is affixed to either the first and second friction bands or to the enclosure. In this manner, by affixing the idler gear retention component after backlash between the idler gears and drive gears has been removed, the hinge assembly can be operated to smoothly rotate the two displays without gear backlash.

FIG. 5 illustrates two examples of idler gear retention components that may be utilized with an alternative first friction band 131 and alternative second friction band 132. As described further below, in each example the idler gear retention component is received in an idler gear retention component aperture 133 formed by the alternative first friction band 131 and alternative second friction band 132. More particularly, the alternative first friction band 131 comprises a first arcuate feature 134 in a first arcuate biasing portion 137 and the second alternative friction band 132 comprises a second arcuate feature 136 in a second arcuate biasing portion 138, with the first arcuate feature and the second arcuate feature cooperating to form the idler gear retention component aperture 133. Advantageously and as described in more detail below, these arcuate features forming the idler gear retention component aperture 133 enable the idler gear retention component to be received and rotated to remove backlash between the idler gears and the drive gears.

The arcuate contacting surfaces of the alternative first and second friction bands 131, 132 that contact the first and second drive gear shafts 36, 48 have the same configuration as the arcuate contacting surfaces 68, 70, 80, and 82 of the first and second friction bands 62, 64 described above. Additionally and like the first and second friction bands 62, 64, the alternative first and second friction bands 131, 132 include first and second arcuate biasing portions 137, 138 that contact the corresponding first inner surface 108 and second inner surface 110, respectively, of the enclosure 106 to create an interference that presses the arcuate contacting surfaces against the first drive gear shaft 36 and the second drive gear shaft 48 as described above.

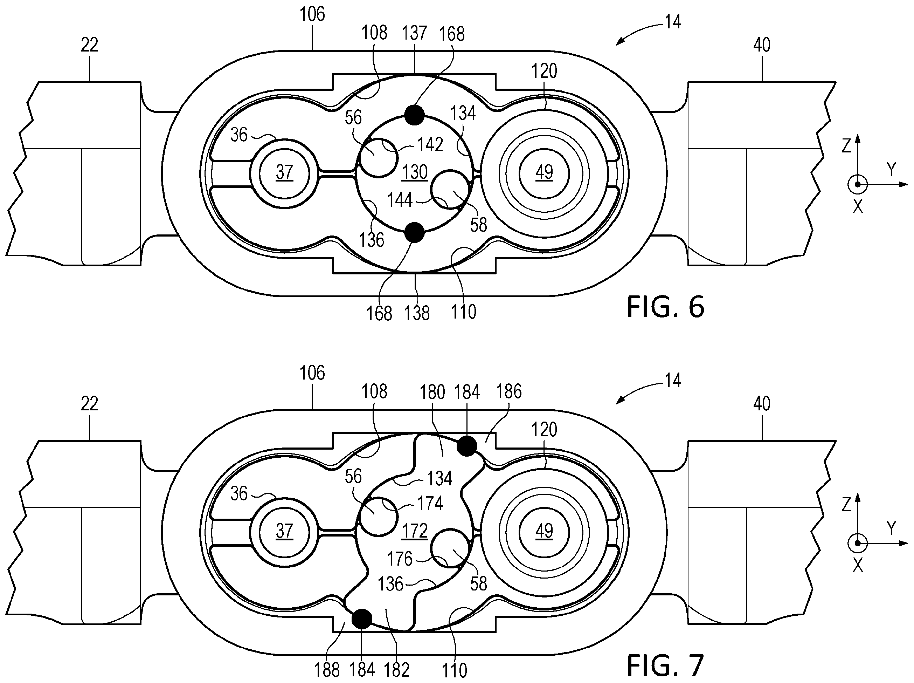

With reference to FIGS. 5 and 6 and described further below, in one configuration an idler gear retention component 130 is received in the idler gear retention component aperture 133 formed by the alternative first friction band 131 and alternative second friction band 132. In this example the idler gear retention component 130 comprises a cylindrical structure including a first bore 142 that rotatably receives the first idler gear shaft 56 and a second bore 144 that rotatably receives the second idler gear shaft 58.

As noted above, and in one potential advantage of this configuration, during assembly the idler gear retention component 130 can be rotated to remove backlash between the idler gears and the drive gears. In one example, the idler gear retention component 130 is inserted into the idler gear retention component aperture 133. The first idler gear shaft 56 is inserted into the first bore 142 and the second idler gear shaft 58 is inserted into the second bore 144. With the idler gear retention component 130 having received the first and second idler gear shafts 56, 58 and being inserted into the idler gear retention component aperture 133, in some examples a tooth of an idler gear may not be contacting the face of a corresponding tooth of the adjacent drive gear. For example, FIG. 9 illustrates an example in which a first idler tooth 150 of the first idler gear 52 in FIG. 8 is not contacting the face of a drive tooth of the corresponding drive gear 34. If the first idler gear 52 and first drive gear 34 were left in this positioning, this backlash or slop between the teeth of the first idler gear and first drive gear can result in a less desirable user experience, such as a loose or discontinuous feeling when the display substrates are rotated.

To address this potential issue and with reference to the example of FIGS. 6, 8, and 10, when the idler gear retention component 130 is located in the idler gear retention component aperture 133, the idler gear retention component is rotated to engage the face 148 of the first idler tooth 150 with the face 152 of the first drive tooth 154. In the present example and as shown in FIG. 8, the idler gear retention component 130 is rotated in a counter-clockwise direction. In other examples the idler gear retention component 130 can be rotated in a clockwise direction to achieve similar results. Additionally, and with reference to FIG. 8, it will be appreciated that such rotation of the idler gear retention component 130 also causes an idler tooth 162 of the second idler gear 54 to engage with a drive tooth 164 of the second drive gear 44 in a similar manner.

After rotating the idler gear retention component 130 as described above, the idler gear retention component is then affixed in this adjusted position. In this manner, and in another potential advantage of the present disclosure, this configuration removes any backlash between the idler gears and the drive gears at the manufacturing stage of hinge assembly 14.

In some examples, after rotation the idler gear retention component 130 is affixed to the alternative first friction band 131 and to the alternative second friction band 132. In one example and with reference to FIG. 6, the idler gear retention component 130 is welded at welds 168 to the alternative first friction band 131 and to the alternative second friction band 132. In these examples, welding the idler gear retention component 130 to the alternative first friction band 131 and the alternative second friction band 132 provides a cost-effective, simple, and quick fastening method for securing the idler gear retention component in position.

With reference now to FIGS. 5 and 7, in another example implementation an alternative idler gear retention component 172 includes additional features that provide a different manner of affixing the idler gear retention component after rotation. As illustrated in these figures, and like the idler gear retention component 130 described above, the alternative idler gear retention component 172 also comprises a cylindrical structure including a first bore 174 that rotatably receives the first idler gear shaft 56 and a second bore 176 that rotatably receives the second idler gear shaft 58. In this example, the alternative idler gear retention component also includes a first tab 180 extending from a distal end of the component and an opposing second tab 182 also extending from the distal end.

After the alternative idler gear retention component 172 is inserted into the idler gear retention component aperture 133 and rotated as described above, and with reference now to FIG. 7, the first tab 180 and second tab 182 are affixed to interior surfaces 186 and 188, respectively, of the enclosure 106. In this example, the first tab 180 is welded to interior surface 186 and the second tab 182 is welded to interior surface 188 at welds 184. In this manner, and in one potential advantage of this configuration, affixing the alternative idler gear retention component 172 to interior surfaces 186 and 188 of the enclosure 106 via first tab 180 and second tab 182 avoids imparting heat to the first and second alternative first friction bands 131, 132, thereby decreasing any risk of heat-induced structural conditioning that could impact structural strength of the alternative friction bands.

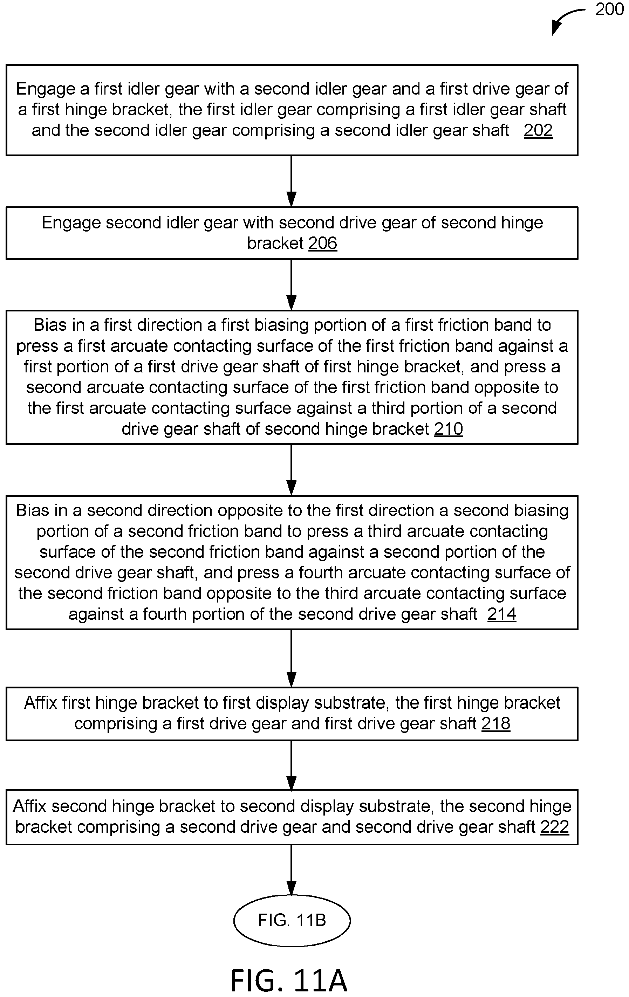

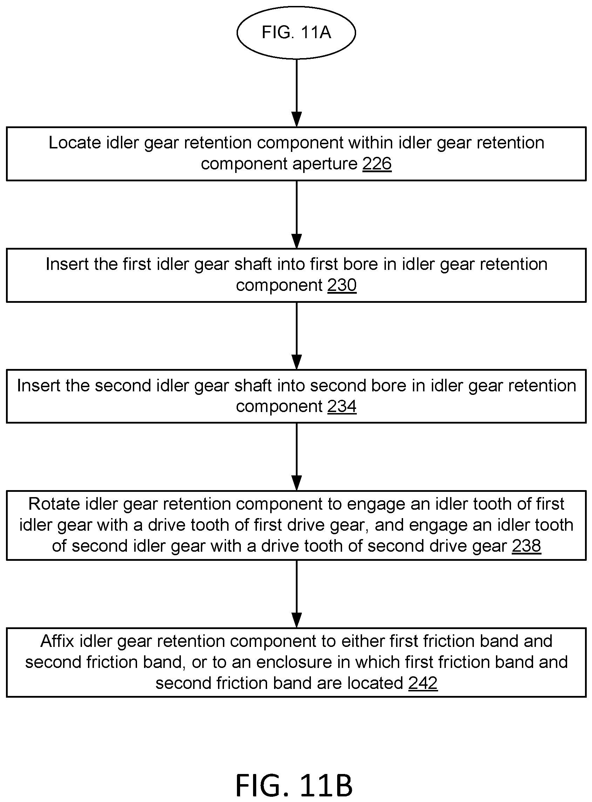

With reference now to FIGS. 11A and 11B, an example method 200 of rotatably coupling a first display substrate of a computing device to a second display substrate will now be described. The following description of method 200 is provided with reference to the components described herein and shown in FIGS. 1-10. For example, the method 200 may be performed using the components of any of the examples of hinge assemblies 14 described herein.

It will be appreciated that following description of method 200 is provided by way of example and is not meant to be limiting. Therefore, it is to be understood that method 200 may include additional and/or alternative steps relative to those illustrated in FIG. 10. Further, it is to be understood that the steps of method 200 may be performed in any suitable order. Further still, it is to be understood that one or more steps may be omitted from method 200 without departing from the scope of this disclosure. It will also be appreciated that method 200 also may be performed in other contexts using other suitable components.

With reference to FIG. 11A, at 202 the method 200 includes engaging a first idler gear with a second idler gear and a first drive gear of a first hinge bracket, wherein the first idler gear comprises a first idler gear shaft and the second idler gear comprises a second idler gear shaft. At 206 the method 200 includes engaging the second idler gear with a second drive gear of a second hinge bracket. At 210 the method 200 includes biasing in a first direction a first biasing portion of a first friction band to press a first arcuate contacting surface of the first friction band against a first portion of a first drive gear shaft of the first hinge bracket, and press a second arcuate contacting surface of the first friction band opposite to the first arcuate contacting surface against a third portion of a second drive gear shaft of the second hinge bracket.

At 214 the method 200 includes biasing in a second direction opposite to the first direction a second biasing portion of a second friction band to press a third arcuate contacting surface of the second friction band against a second portion of the first drive gear shaft, and press a fourth arcuate contacting surface of the second friction band opposite to the third arcuate contacting surface against a fourth portion of the second drive gear shaft. At 218 the method 200 includes affixing the first hinge bracket to the first display substrate. At 222 the method 200 includes affixing the second hinge bracket to the second display substrate.

With reference now to FIG. 11B, at 226 the method 200 includes, where the first friction band and the second friction band form an idler gear retention component aperture, locating an idler gear retention component within the idler gear retention component aperture. At 230 the method 200 includes inserting the first idler gear shaft into a first bore in the idler gear retention component. At 234 the method 200 includes inserting the second idler gear shaft into a second bore in the idler gear retention component. At 238 the method 200 includes rotating the idler gear retention component to engage an idler tooth of the first idler gear with a drive tooth of the first drive gear, and engage an idler tooth of the second idler gear with a drive tooth of the second drive gear. At 242 the method 200 includes affixing the idler gear retention component to either the first friction band and the second friction band, or to an enclosure in which the first friction band and the second friction band are located.

The following paragraphs provide additional support for the claims of the subject application. One aspect provides a hinge assembly for rotatably coupling a first substrate of a computing device to a second substrate of the computing device, the hinge assembly comprising: a first hinge bracket configured to be affixed to the first substrate and comprising a first drive gear and first drive gear shaft; a second hinge bracket configured to be affixed to the second substrate and comprising a second drive gear and second drive gear shaft; a first idler gear engaging the first drive gear and a second idler gear, the second idler gear engaging the second drive gear, wherein the first idler gear comprises a first idler gear shaft and the second idler gear comprises a second idler gear shaft; a first friction band comprising a first arcuate contacting surface, an opposing second arcuate contacting surface, and a first biasing portion between the first arcuate contacting surface and the second arcuate contacting surface, wherein the first biasing portion is biased in a first direction to operatively press the first arcuate contacting surface against a first portion of the first drive gear shaft and the second arcuate contacting surface against a third portion of the second drive gear shaft; and a second friction band comprising a third arcuate contacting surface, an opposing fourth arcuate contacting surface, and a second biasing portion between the third arcuate contacting surface and the fourth arcuate contacting surface, wherein the second biasing portion is biased in a second direction opposite to the first direction to operatively press the third arcuate contacting surface against a second portion of the first drive gear shaft and the fourth arcuate contacting surface against a fourth portion of the second drive gear shaft. The hinge assembly may additionally or alternatively include, wherein the first biasing portion comprises a first arcuate biasing surface about which the first friction band is pivotable, and the second biasing portion comprises a second arcuate biasing surface about which the second friction band is pivotable. The hinge assembly may additionally or alternatively include an enclosure in which the first friction band and the second friction band are located, the enclosure comprising: a first inner surface contacting the first arcuate biasing surface of the first friction band in an interference fit; and a second inner surface contacting the second arcuate biasing surface of the second friction band in an interference fit. The hinge assembly may additionally or alternatively include, wherein the first direction and the second direction are orthogonal to axes of the first drive gear shaft and the second drive gear shaft. The hinge assembly may additionally or alternatively include, wherein the first friction band further defines a first idler hole that rotatably receives the first idler gear shaft, and the second friction band further defines a second idler hole that rotatably receives the second idler gear shaft. The hinge assembly may additionally or alternatively include an idler gear retention component received in an idler gear retention component aperture formed by the first friction band and the second friction band, the idler gear retention component comprising a first bore that rotatably receives the first idler gear shaft and a second bore that rotatably receives the second idler gear shaft. The hinge assembly may additionally or alternatively include, wherein the first friction band comprises a first arcuate feature in the first biasing portion, the second friction band comprises a second arcuate feature in the second biasing portion, and the first arcuate feature and the second arcuate feature form the idler gear retention component aperture. The hinge assembly may additionally or alternatively include, wherein the idler gear retention component is affixed to the first friction band and to the second friction band. The hinge assembly may additionally or alternatively include, wherein the idler gear retention component comprises: a first tab that is affixed to an enclosure in which the first friction band and the second friction band are located; and a second tab, opposite the first tab, that is affixed to the enclosure.

Another aspect provides a computing device, comprising: a first display substrate; and a second display substrate rotatably coupled to the first display substrate via at least one hinge assembly as described in any of the configurations of hinge assemblies described herein. The computing device may additionally or alternative include, wherein the second display substrate is rotatably coupled to the first display substrate via a first and a second hinge assembly as described in any of the configurations of hinge assemblies described herein.

Another aspect provides a method of rotatably coupling a first display substrate of a computing device to a second display substrate, the method comprising: engaging a first idler gear with a second idler gear and a first drive gear of a first hinge bracket, wherein the first idler gear comprises a first idler gear shaft and the second idler gear comprises a second idler gear shaft; engaging the second idler gear with the a second drive gear of a second hinge bracket; biasing in a first direction a first biasing portion of a first friction band to press a first arcuate contacting surface of the first friction band against a first portion of a first drive gear shaft of the first hinge bracket, and press a second arcuate contacting surface of the first friction band opposite to the first arcuate contacting surface against a third portion of a second drive gear shaft of the second hinge bracket; biasing in a second direction opposite to the first direction a second biasing portion of a second friction band to press a third arcuate contacting surface of the second friction band against a second portion of the first drive gear shaft, and press a fourth arcuate contacting surface of the second friction band opposite to the third arcuate contacting surface against a fourth portion of the second drive gear shaft; affixing the first hinge bracket to the first display substrate; and affixing the second hinge bracket to the second display substrate. The method may additionally or alternatively include, wherein the first friction band and the second friction band form an idler gear retention component aperture, locating an idler gear retention component within the idler gear retention component aperture; inserting the first idler gear shaft into a first bore in the idler gear retention component; inserting the second idler gear shaft into a second bore in the idler gear retention component; rotating the idler gear retention component to engage an idler tooth of the first idler gear with a drive tooth of the first drive gear, and engage an idler tooth of the second idler gear with a drive tooth of the second drive gear; and affixing the idler gear retention component to either the first friction band and the second friction band, or to an enclosure in which the first friction band and the second friction band are located.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A hinge assembly (14) for rotatably coupling a first substrate (16) of a computing device to a second substrate (18) of the computing device, the hinge assembly comprising:
a first hinge bracket (22) configured to be affixed to the first substrate (16) and comprising a first drive gear (34) and first drive gear shaft (36);
a second hinge bracket (40) configured to be affixed to the second substrate (18) and comprising a second drive gear (44) and second drive gear shaft (48);
a first idler gear (52) engaging the first drive gear (34) and a second idler gear (54), the second idler gear (54) engaging the second drive gear (44), wherein the first idler gear (52) comprises a first idler gear shaft (56) and the second idler gear (54) comprises a second idler gear shaft (58);
a first friction band (62; 131) comprising a first arcuate contacting surface (68), an opposing second arcuate contacting surface (70), and a first biasing portion (74) between the first arcuate contacting surface (68) and the second arcuate contacting surface (70), wherein the first biasing portion (74) is biased in a first direction (76) to operatively press the first arcuate contacting surface (68) against a first portion of the first drive gear shaft (36) and the second arcuate contacting surface (70) against a third portion of the second drive gear shaft (48); and
a second friction band (64; 132) separate to the first friction band (62; 131), the second friction band (64) comprising a third arcuate contacting surface (80), an opposing fourth arcuate contacting surface (82), and a second biasing portion (84) between the third arcuate contacting surface (80) and the fourth arcuate contacting surface (82), wherein the second biasing portion (84) is biased in a second direction (78) opposite to the first direction (76) to operatively press the third arcuate contacting surface (80) against a second portion of the first drive gear shaft (36) and the fourth arcuate contacting surface (82) against a fourth portion of the second drive gear shaft (48).

2. The hinge assembly (14) of claim 1, wherein the first biasing portion (74) comprises a first arcuate biasing surface (75; 137) about which the first friction band (62; 131) is pivotable, and the second biasing portion (84) comprises a second arcuate biasing surface (85; 138) about which the second friction band (64; 132) is pivotable.

3. The hinge assembly (14) of claim 2, further comprising an enclosure (106) in which the first friction band (62; 131) and the second friction band (64; 132) are located, the enclosure (106) comprising:
a first inner surface (108) contacting the first arcuate biasing surface (75; 137) of the first friction band in an interference fit; and
a second inner surface (110) contacting the second arcuate biasing surface (85; 138) of the second friction band in an interference fit.

4. The hinge assembly (14) of any preceding claim, wherein the first direction (76) and the second direction (78) are orthogonal to axes (100, 102) of the first drive gear shaft (36) and the second drive gear shaft (48).

5. The hinge assembly (14) of any preceding claim, wherein the first friction band (62) further defines a first idler hole (112) that rotatably receives the first idler gear shaft (56), and the second friction band (64) further defines a second idler hole (116) that rotatably receives the second idler gear shaft (58).

6. The hinge assembly (14) of any preceding claim, further comprising an idler gear retention component (130; 172) received in an idler gear retention component aperture (133) formed by the first friction band (131) and the second friction band (132), the idler gear retention component (130; 172) comprising a first bore (142; 174) that rotatably receives the first idler gear shaft (56) and a second bore (144; 176) that rotatably receives the second idler gear shaft (58).

7. The hinge assembly (14) of claim 6, wherein the first friction band (131) comprises a first arcuate feature (134) in the first biasing portion (137), the second friction band (132) comprises a second arcuate feature (136) in the second biasing portion (138), and the first arcuate feature (134) and the second arcuate feature (136) form the idler gear retention component aperture (133).

8. The hinge assembly (14) of claim 6, wherein the idler gear retention component (130) is affixed to the first friction band (131) and to the second friction band (132).

9. The hinge assembly (14) of claim 6, wherein the idler gear retention component (172) comprises:
a first tab (180) that is affixed to an enclosure (106) in which the first friction band (131) and the second friction band (132) are located; and
a second tab (182), opposite the first tab (180), that is affixed to the enclosure (106).

10. A computing device (10), comprising:
a first display substrate (16); and
a second display substrate (18) rotatably coupled to the first display substrate (16) via at least one hinge assembly (14) as claimed in any preceding claim.

11. The computing device (10) of claim 10 wherein the second display substrate (18) is rotatably coupled to the first display substrate (16) via a first and a second hinge assembly (14) as claimed in any preceding claim.

12. A method of rotatably coupling a first display substrate (16) of a computing device to a second display substrate (18), the method comprising:
engaging a first idler gear (52) with a second idler gear (54) and a first drive gear of (34) a first hinge bracket (22), wherein the first idler gear (52) comprises a first idler gear shaft (56) and the second idler gear (54) comprises a second idler gear shaft (58);
engaging the second idler gear (54) with a second drive gear (44) of a second hinge bracket (40);
biasing in a first direction (76) a first biasing portion (74) of a first friction band (62; 131) to press a first arcuate contacting surface (68) of the first friction band (62; 131) against a first portion of a first drive gear shaft (36) of the first hinge bracket, and press a second arcuate contacting surface (70) of the first friction band opposite to the first arcuate contacting surface (68) against a third portion of a second drive gear shaft (48) of the second hinge bracket;
biasing in a second direction (78) opposite to the first direction (76) a second biasing portion (84) of a second friction band (64; 132) to press a third arcuate contacting surface (80) of the second friction band against a second portion of the first drive gear shaft (36), and press a fourth arcuate contacting surface (82) of the second friction band opposite to the third arcuate contacting surface (80) against a fourth portion of the second drive gear shaft (48), wherein the second friction band (64; 132) is separate to the first friction band (62; 131);
affixing the first hinge bracket (22) to the first display substrate (16); and
affixing the second hinge bracket (40) to the second display substrate (18).

13. The method of claim 12, wherein the first friction band (131) and the second friction band (132) form an idler gear retention component aperture (133), the method further comprising:
locating an idler gear retention component (130; 172) within the idler gear retention component aperture (133);
inserting the first idler gear shaft (54) into a first bore (142; 174) in the idler gear retention component;
inserting the second idler gear shaft (58) into a second bore (144; 176) in the idler gear retention component;
rotating the idler gear retention component (130; 172) to engage an idler tooth (150) of the first idler gear (52) with a drive tooth (154) of the first drive gear (34), and engage an idler tooth (162) of the second idler gear (54) with a drive tooth (164) of the second drive gear (44); and
affixing the idler gear retention component (130; 172) to either the first friction band (131) and the second friction band (132), or to an enclosure (106) in which the first friction band and the second friction band (131, 132) are located.

## Patentansprüche

1. Eine Scharnierbaugruppe (14) zum drehbaren Koppeln eines ersten Substrats (16) einer Rechenvorrichtung mit einem zweiten Substrat (18) der Rechenvorrichtung, wobei die Scharnierbaugruppe Folgendes beinhaltet:
einen ersten Scharnierträger (22), der dazu konfiguriert ist, an dem ersten Substrat (16) befestigt zu werden, und der ein erstes Antriebsrad (34) und eine erste Antriebsradwelle (36) beinhaltet;
einen zweiten Scharnierträger (40), der dazu konfiguriert ist, an dem zweiten Substrat (18) befestigt zu werden, und der ein zweites Antriebsrad (44) und eine zweite Antriebsradwelle (48) beinhaltet;
ein erstes Zwischenrad (52), das in das erste Antriebsrad (34) eingreift, und ein zweites Zwischenrad (54), wobei das zweite Zwischenrad (54) in das zweite Antriebsrad (44) eingreift, wobei das erste Zwischenrad (52) eine erste Zwischenradwelle (56) beinhaltet und das zweite Zwischenrad (54) eine zweite Zwischenradwelle (58) beinhaltet;
ein erstes Reibungsband (62; 131), das eine erste bogenförmige Kontaktoberfläche (68), eine gegenüberliegende zweite bogenförmige Kontaktoberfläche (70) und einen ersten Vorspannabschnitt (74) zwischen der ersten bogenförmigen Kontaktoberfläche (68) und der zweiten bogenförmigen Kontaktoberfläche (70) beinhaltet, wobei der erste Vorspannabschnitt (74) in eine erste Richtung (76) vorgespannt ist, um die erste bogenförmige Kontaktoberfläche (68) gegen einen ersten Abschnitt der ersten Antriebszahnradwelle (36) und die zweite bogenförmige Kontaktoberfläche (70) gegen einen dritten Abschnitt der zweiten Antriebszahnradwelle (48) zu drücken; und
ein zweites Reibungsband (64; 132), das von dem ersten Reibungsband (62; 131) getrennt ist, wobei das zweite Reibungsband (64) eine dritte bogenförmige Kontaktoberfläche (80), eine gegenüberliegende vierte bogenförmige Kontaktoberfläche (82) und einen zweiten Vorspannabschnitt (84) zwischen der dritten bogenförmigen Kontaktoberfläche (80) und der vierten bogenförmigen Kontaktoberfläche (82) beinhaltet, wobei der zweite Vorspannabschnitt (84) in eine zweite Richtung (78) vorgespannt ist, die der ersten Richtung (76) gegenüberliegt, um die dritte bogenförmige Kontaktoberfläche (80) gegen einen zweiten Abschnitt der ersten Antriebszahnradwelle (36) und die vierte bogenförmige Kontaktoberfläche (82) gegen einen vierten Abschnitt der zweiten Antriebszahnradwelle (48) zu drücken.

2. Scharnierbaugruppe (14) gemäß Anspruch 1, wobei der erste Vorspannabschnitt (74) eine erste bogenförmige Vorspannoberfläche (75; 137) beinhaltet, um die das erste Reibungsband (62; 131) schwenkbar ist, und der zweite Vorspannabschnitt (84) eine zweite bogenförmige Vorspannoberfläche (85; 138) beinhaltet, um die das zweite Reibungsband (64; 132) schwenkbar ist.

3. Scharnierbaugruppe (14) gemäß Anspruch 2, die ferner ein Gehäuse (106) beinhaltet, in dem sich das erste Reibungsband (62; 131) und das zweite Reibungsband (64; 132) befinden, wobei das Gehäuse (106) Folgendes beinhaltet:
eine erste Innenoberfläche (108), die die erste bogenförmige Vorspannoberfläche (75; 137) des ersten Reibungsbandes in einer Presspassung berührt; und
eine zweite Innenoberfläche (110), die die zweite bogenförmige Vorspannoberfläche (85; 138) des zweiten Reibungsbandes in einer Presspassung berührt.

4. Scharnierbaugruppe (14) gemäß einem der vorhergehenden Ansprüche, wobei die erste Richtung (76) und die zweite Richtung (78) orthogonal zu den Achsen (100, 102) der ersten Antriebsradwelle (36) und der zweiten Antriebsradwelle (48) sind.

5. Scharnierbaugruppe (14) gemäß einem der vorhergehenden Ansprüche, wobei das erste Reibungsband (62) ferner ein erstes Zwischenradloch (112) definiert, das die erste Zwischenradwelle (56) drehbar aufnimmt, und das zweite Reibungsband (64) ferner ein zweites Zwischenradloch (116) definiert, das die zweite Zwischenradwelle (58) drehbar aufnimmt.

6. Scharnierbaugruppe (14) gemäß einem der vorhergehenden Ansprüche, die ferner eine Zwischenradhaltekomponente (130; 172) beinhaltet, die in einer Zwischenradhaltekomponentenöffnung (133) aufgenommen wird, die durch das erste Reibungsband (131) und das zweite Reibungsband (132) ausgebildet wird, wobei die Zwischenradhaltekomponente (130; 172) eine erste Bohrung (142; 174), die die erste Zwischenradwelle (56) drehbar aufnimmt, und eine zweite Bohrung (144; 176), die die zweite Zwischenradwelle (58) drehbar aufnimmt, beinhaltet.

7. Scharnierbaugruppe (14) gemäß Anspruch 6, wobei das erste Reibungsband (131) ein erstes bogenförmiges Merkmal (134) in dem ersten Vorspannabschnitt (137) beinhaltet, das zweite Reibungsband (132) ein zweites bogenförmiges Merkmal (136) in dem zweiten Vorspannabschnitt (138) beinhaltet und das erste bogenförmige Merkmal (134) und das zweite bogenförmige Merkmal (136) die Zwischenradhaltekomponentenöffnung (133) ausbilden.

8. Scharnierbaugruppe (14) gemäß Anspruch 6, wobei die Zwischenradhaltekomponente (130) an dem ersten Reibungsband (131) und dem zweiten Reibungsband (132) befestigt ist.

9. Scharnierbaugruppe (14) gemäß Anspruch 6, wobei die Zwischenradhaltekomponente (172) Folgendes beinhaltet:
eine erste Lasche (180), die an einem Gehäuse (106) befestigt ist, in dem sich das erste Reibungsband (131) und das zweite Reibungsband (132) befinden; und
eine der ersten Lasche (180) gegenüberliegende zweite Lasche (182), die an dem Gehäuse (106) befestigt ist.

10. Eine Rechenvorrichtung (10), die Folgendes beinhaltet:
ein erstes Anzeigesubstrat (16); und
ein zweites Anzeigesubstrat (18), das drehbar mit dem ersten Anzeigesubstrat (16) über wenigstens eine Scharnierbaugruppe (14) gemäß einem der vorhergehenden Ansprüche gekoppelt ist.

11. Rechenvorrichtung (10) gemäß Anspruch 10, wobei das zweite Anzeigesubstrat (18) drehbar mit dem ersten Anzeigesubstrat (16) über eine erste und eine zweite Scharnierbaugruppe (14) gemäß einem der vorhergehenden Ansprüche gekoppelt ist.

12. Ein Verfahren zum drehbaren Koppeln eines ersten Anzeigesubstrats (16) einer Rechenvorrichtung mit einem zweiten Anzeigesubstrat (18), wobei das Verfahren Folgendes beinhaltet:
Eingreifen eines ersten Zwischenrads (52) in ein zweites Zwischenrad (54) und ein erstes Antriebsrad (34) eines ersten Scharnierträgers (22), wobei das erste Zwischenrad (52) eine erste Zwischenradwelle (56) beinhaltet und das zweite Zwischenrad (54) eine zweite Zwischenradwelle (58) beinhaltet;
Eingreifen des zweiten Zwischenrads (54) in ein zweites Antriebsrad (44) eines zweiten Scharnierträgers (40);
Vorspannen eines ersten Vorspannabschnitts (74) eines ersten Reibungsbands (62; 131) in eine erste Richtung (76), um eine erste bogenförmige Kontaktoberfläche (68) des ersten Reibungsbands (62; 131) gegen einen ersten Abschnitt einer ersten Antriebsradwelle (36) des ersten Scharnierträgers zu drücken, und eine zweite bogenförmige Kontaktoberfläche (70) des ersten Reibungsbands gegenüber der ersten bogenförmigen Kontaktoberfläche (68) gegen einen dritten Abschnitt einer zweiten Antriebsradwelle (48) des zweiten Scharnierträgers zu drücken;
Vorspannen eines zweiten Vorspannabschnitts (84) eines zweiten Reibungsbands (64; 132) in eine zweite Richtung (78) entgegengesetzt zu der ersten Richtung (76), um eine dritte bogenförmige Kontaktoberfläche (80) des zweiten Reibungsbands gegen einen zweiten Abschnitt der ersten Antriebsradwelle (36) zu drücken, und eine vierte bogenförmige Kontaktoberfläche (82) des zweiten Reibungsbands entgegengesetzt zu der dritten bogenförmigen Kontaktoberfläche (80) gegen einen vierten Abschnitt der zweiten Antriebsradwelle (48) zu drücken, wobei das zweite Reibungsband (64; 132) von dem ersten Reibungsband (62; 131) getrennt ist;
Befestigen des ersten Scharnierträgers (22) an dem ersten Anzeigesubstrat (16); und Befestigen des zweiten Scharnierträgers (40) an dem zweiten Anzeigesubstrat (18).

13. Verfahren gemäß Anspruch 12, wobei das erste Reibungsband (131) und das zweite Reibungsband (132) eine Zwischenradhaltekomponentenöffnung (133) ausbilden, wobei das Verfahren ferner Folgendes beinhaltet:
Anordnen einer Zwischenradhaltekomponente (130; 172) in der Zwischenradhaltekomponentenöffnung (133);
Einsetzen der ersten Zwischenradwelle (54) in eine erste Bohrung (142; 174) in der Zwischenradhaltekomponente;
Einsetzen der zweiten Zwischenradwelle (58) in eine zweite Bohrung (144; 176) in der Zwischenradhaltekomponente;
Drehen der Zwischenradhaltekomponente (130; 172), um in einen Zwischenradzahn (150) des ersten Zwischenrads (52) mit einem Antriebszahn (154) des ersten Antriebsrads (34) einzugreifen und in einen Zwischenradzahn (162) des zweiten Zwischenrads (54) mit einem Antriebszahn (164) des zweiten Antriebsrads (44) einzugreifen; und
Befestigen der Zwischenradhaltekomponente (130; 172) entweder an dem ersten Reibungsband (131) und dem zweiten Reibungsband (132) oder an einem Gehäuse (106), in dem sich das erste Reibungsband und das zweite Reibungsband (131, 132) befinden.

## Revendications

1. Un ensemble charnière (14) permettant d'accoupler de façon rotative un premier substrat (16) d'un dispositif informatique à un deuxième substrat (18) du dispositif informatique, l'ensemble charnière comprenant :
une première patte de charnière (22) configurée pour être fixée au premier substrat (16) et comprenant un premier pignon d'entraînement (34) et un arbre de premier pignon d'entraînement (36) ;
une deuxième patte de charnière (40) configurée pour être fixée au deuxième substrat (18) et comprenant un deuxième pignon d'entraînement (44) et un arbre de deuxième pignon d'entraînement (48) ;
un premier pignon fou (52) se mettant en prise avec le premier pignon d'entraînement (34) et un deuxième pignon fou (54), le deuxième pignon fou (54) se mettant en prise avec le deuxième pignon d'entraînement (44), dans lequel le premier pignon fou (52) comprend un arbre de premier pignon fou (56) et le deuxième pignon fou (54) comprend un arbre de deuxième pignon fou (58) ;
une première bande de friction (62 ; 131) comprenant une première surface de contact arquée (68), une deuxième surface de contact arquée (70), et une première portion de sollicitation (74) entre la première surface de contact arquée (68) et la deuxième surface de contact arquée (70), dans lequel la première portion de sollicitation (74) est sollicitée dans un premier sens (76) pour presser fonctionnellement la première surface de contact arquée (68) contre une première portion de l'arbre de premier pignon d'entraînement (36) et la deuxième surface de contact arquée (70) contre une troisième portion de l'arbre de deuxième pignon d'entraînement (48) ; et
une deuxième bande de friction (64 ; 132) séparée de la première bande de friction (62 ; 131), la deuxième bande de friction (64) comprenant une troisième surface de contact arquée (80), une quatrième surface de contact arquée opposée (82), et une deuxième portion de sollicitation (84) entre la troisième surface de contact arquée (80) et la quatrième surface de contact arquée (82), dans lequel la deuxième portion de sollicitation (84) est sollicitée dans un deuxième sens (78) opposé au premier sens (76) pour presser fonctionnellement la troisième surface de contact arquée (80) contre une deuxième portion de l'arbre de premier pignon d'entraînement (36) et la quatrième surface de contact arquée (82) contre une quatrième portion de l'arbre de deuxième pignon d'entraînement (48).

2. L'ensemble charnière (14) de la revendication 1, dans lequel la première portion de sollicitation (74) comprend une première surface de sollicitation arquée (75 ; 137) autour de laquelle la première bande de friction (62 ; 131) peut pivoter, et la deuxième portion de sollicitation (84) comprend une deuxième surface de sollicitation arquée (85 ; 138) autour de laquelle la deuxième bande de friction (64 ; 132) peut pivoter.

3. L'ensemble charnière (14) de la revendication 2, comprenant en outre une enceinte (106) dans laquelle la première bande de friction (62 ; 131) et la deuxième bande de friction (64 ; 132) sont placées, l'enceinte (106) comprenant :
une première surface intérieure (108) venant en contact avec la première surface de sollicitation arquée (75 ; 137) de la première bande de friction suivant un ajustement serré ; et
une deuxième surface intérieure (110) venant en contact avec la deuxième surface de sollicitation arquée (85 ; 138) de la deuxième bande de friction suivant un ajustement serré.

4. L'ensemble charnière (14) de n'importe quelle revendication précédente, dans lequel le premier sens (76) et le deuxième sens (78) sont orthogonaux à des axes (100, 102) de l'arbre de premier pignon d'entraînement (36) et de l'arbre de deuxième pignon d'entraînement (48).

5. L'ensemble charnière (14) de n'importe quelle revendication précédente, dans lequel la première bande de friction (62) définit en outre un premier trou pour pignon fou (112) qui reçoit de façon rotative l'arbre de premier pignon fou (56), et la deuxième bande de friction (64) définit en outre un deuxième trou pour pignon fou (116) qui reçoit de façon rotative l'arbre de deuxième pignon fou (58).

6. L'ensemble charnière (14) de n'importe quelle revendication précédente, comprenant en outre un composant de retenue de pignon fou (130 ; 172) reçu dans une ouverture pour composant de retenue de pignon fou (133) formée par la première bande de friction (131) et la deuxième bande de friction (132), le composant de retenue de pignon fou (130 ; 172) comprenant un premier alésage (142 ; 174) qui reçoit de façon rotative l'arbre de premier pignon fou (56) et un deuxième alésage (144 ; 176) qui reçoit de façon rotative l'arbre de deuxième pignon fou (58).

7. L'ensemble charnière (14) de la revendication 6, dans lequel la première bande de friction (131) comprend un premier élément arqué (134) dans la première portion de sollicitation (137), la deuxième bande de friction (132) comprend un deuxième élément arqué (136) dans la deuxième portion de sollicitation (138), et le premier élément arqué (134) et le deuxième élément arqué (136) forment l'ouverture pour composant de retenue de pignon fou (133).

8. L'ensemble charnière (14) de la revendication 6, dans lequel le composant de retenue de pignon fou (130) est fixé à la première bande de friction (131) et à la deuxième bande de friction (132).

9. L'ensemble charnière (14) de la revendication 6, dans lequel le composant de retenue de pignon fou (172) comprend :
une première languette (180) qui est fixée à une enceinte (106) dans laquelle la première bande de friction (131) et la deuxième bande de friction (132) sont placées ; et
une deuxième languette (182), opposée à la première languette (180), qui est fixée à l'enceinte (106).

10. Un dispositif informatique (10), comprenant :
un premier substrat d'affichage (16) ; et
un deuxième substrat d'affichage (18) accouplé de façon rotative au premier substrat d'affichage (16) par le biais d'au moins un ensemble charnière (14) tel que revendiqué dans n'importe quelle revendication précédente.

11. Le dispositif informatique (10) de la revendication 10, dans lequel le deuxième substrat d'affichage (18) est accouplé de façon rotative au premier substrat d'affichage (16) par le biais d'un premier et d'un deuxième ensemble charnière (14) tels que revendiqués dans n'importe quelle revendication précédente.

12. Un procédé d'accouplement de façon rotative d'un premier substrat d'affichage (16) d'un dispositif informatique à un deuxième substrat d'affichage (18), le procédé comprenant :
la mise en prise d'un premier pignon fou (52) avec un deuxième pignon fou (54) et un premier pignon d'entraînement (34) d'une première patte de charnière (22), dans lequel le premier pignon fou (52) comprend un arbre de premier pignon fou (56) et le deuxième pignon fou (54) comprend un arbre de deuxième pignon fou (58) ;
la mise en prise du deuxième pignon fou (54) avec un deuxième pignon d'entraînement (44) d'un deuxième ensemble charnière (40) ;
la sollicitation dans un premier sens (76) d'une première portion de sollicitation (74) d'une première bande de friction (62 ; 131) pour presser une première surface de contact arquée (68) de la première bande de friction (62 ; 131) contre une première portion d'un arbre de premier pignon d'entraînement (36) de la première patte de charnière, et presser une deuxième surface de contact arquée (70) de la première bande de friction opposée à la première surface de contact arquée (68) contre une troisième portion d'un arbre de deuxième pignon d'entraînement (48) de la deuxième patte de charnière ;
la sollicitation dans un deuxième sens (78) opposé au premier sens (76) d'une deuxième portion de sollicitation (84) d'une deuxième bande de friction (64 ; 132) pour presser une troisième surface de contact arquée (80) de la deuxième bande de friction contre une deuxième portion de l'arbre de premier pignon d'entraînement (36), et
presser une quatrième surface de contact arquée (82) de la deuxième bande de friction opposée à la troisième surface de contact arquée (80) contre une quatrième portion de l'arbre de deuxième pignon d'entraînement (48), dans lequel la deuxième bande de friction (64 ; 132) est séparée de la première bande de friction (62 ; 131) ;
la fixation de la première patte de charnière (22) au premier substrat d'affichage (16) ; et
la fixation de la deuxième patte de charnière (40) au deuxième substrat d'affichage (18).

13. Le procédé de la revendication 12, dans lequel la première bande de friction (131) et la deuxième bande de friction (132) forment une ouverture pour composant de retenue de pignon fou (133), le procédé comprenant en outre :
le placement d'un composant de retenue de pignon fou (130 ; 172) au sein de l'ouverture pour composant de retenue de pignon fou (133) ;
l'insertion de l'arbre de premier pignon fou (54) dans un premier alésage (142 ; 174) dans le composant de retenue de pignon fou ;
l'insertion de l'arbre de deuxième pignon fou (58) dans un deuxième alésage (144 ; 176) dans le composant de retenue de pignon fou ;
la mise en rotation du composant de retenue de pignon fou (130 ; 172) pour mettre en prise une dent folle (150) du premier pignon fou (52) avec une dent d'entraînement (154) du premier pignon d'entraînement (34), et mettre en prise une dent folle (162) du deuxième pignon fou (54) avec une dent d'entraînement (164) du deuxième pignon d'entraînement (44) ; et
la fixation du composant de retenue de pignon fou (130; 172) soit à la première bande de friction (131) et la deuxième bande de friction (132), soit à une enceinte (106) dans laquelle la première bande de friction et la deuxième bande de friction (131, 132) sont placées.
